(19) Europäisches Patentamt / European Patent Office / Office européen des brevets

(11) **EP 4 083 826 B1**

(12) **EUROPEAN PATENT SPECIFICATION**

(45) Date of publication and mention
of the grant of the patent:
**05.03.2025 Bulletin 2025/10**

(21) Application number: **19957291.8**

(22) Date of filing: **26.12.2019**

(51) International Patent Classification (IPC):
**G06F 21/32** *(2013.01)*

(52) Cooperative Patent Classification (CPC):
**G06F 21/32**

(86) International application number:
**PCT/JP2019/051078**

(87) International publication number:
**WO 2021/130949 (01.07.2021 Gazette 2021/26)**

(54) **IN-EAR ACCOUSTIC AUTHENTICATION DEVICE, METHOD AND PROGRAM**

VORRICHTUNG, VERFAHREN UND PROGRAMM ZUR IM-OHR AKUSTISCHEN
AUTHENTIFIZIERUNG

DISPOSITIF, PROCÉDÉ ET PROGRAMME D'AUTHENTIFICATION ACCOUSTIQUE
INTRA-AURICULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2022 Bulletin 2022/44**

(73) Proprietor: NEC Corporation
**108-8001 Tokyo (JP)**

(72) Inventors:
• **ITO Yoshitaka**
**Tokyo 108-8001 (JP)**
• **ARAKAWA Takayuki**
**Tokyo 108-8001 (JP)**
• **OOSUGI Kouji**
**Tokyo 108-8001 (JP)**

(74) Representative: **Betten & Resch
Patent- und Rechtsanwälte PartGmbB
Maximiliansplatz 14
80333 München (DE)**

(56) References cited:
**WO-A1-2018/051948       JP-A- 2007 115 072
JP-A- 2008 182 509       US-A1- 2019 012 446**

• **AKKERMANS TON H ET AL: "Acoustic Ear Recognition", 5 January 2006, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 697 - 705, ISBN: 978-3-540-74549-5, XP047466616**
• **MAHTO SHIVANGI ET AL: "Ear Acoustic Biometrics Using Inaudible Signals and Its Application to Continuous User Authentication", 2018 26TH EUROPEAN SIGNAL PROCESSING CONFERENCE (EUSIPCO), EURASIP, 3 September 2018 (2018-09-03), pages 1407 - 1411, XP033461466, DOI: 10.23919/ EUSIPCO.2018.8553015**
• **SHOHEI YANO ,TAKAYUKI ARAKAWA, TAKAFUMI KOSHINAKA ,HITOSHI IMAOKA ,HIDEKI IRISAWA: "Improving Acoustic Ear Recognition Accuracy for Personal Identification by Averaging Biometric Data and Spreading Measurement Errors over a Wide Frequency Range.", IEICE TRANSACTIONS ON ELECTRONICS A, vol. JI00-A, no. 4, 1 April 2017 (2017-04-01), pages 161 - 168, XP055934017**

**Description**

The disclosure relates to an in-ear acoustic authentication device, an in-ear acoustic authentication method, and a recording medium, and particularly relates to an in-ear acoustic authentication device, an in-ear acoustic authentication method, and a recording medium that input an inspection signal to an ear of a subject using an audio device and authenticate the subject based on an echo signal from the subject.

[Background Art]

For example, fingerprint authentication, vein authentication, face authentication, iris authentication, and voice authentication are known as personal authentication technologies (referred to as biometric authentication technologies) based on personal characteristics of a living body. Among the personal authentication technologies, in particular, the in-ear acoustic authentication focuses on a personal characteristic of an internal structure of a human ear hole. In the in-ear acoustic authentication, an inspection signal is input to an ear hole of an individual to be authenticated, and personal authentication is performed using an echo signal based on an echo sound from the ear hole.

An individual (person to be authenticated) to be subjected to personal authentication wears a device (referred to as an earphone-type device or a hearable device) having an earphone shape with a built-in speaker and microphone on the auricle. The speaker of the earphone-type device transmits an inspection signal (sound wave) toward the inside of the ear hole of the person to be authenticated. The microphone of the earphone-type device detects an echo sound from the ear hole. Then, an echo signal based on the echo sound is transmitted from the earphone-type device to the personal authentication device. The personal authentication device performs personal authentication by collating features of one or more individuals registered in advance with a feature extracted from an echo signal received from the earphone-type device.

The in-ear acoustic authentication technology has advantages that the personal authentication is instantaneously and stably completed, that even when an individual is moving or working, the personal authentication can be immediately performed while the individual wears the earphone-type device (hands-free), and that confidentiality regarding the internal structure of the human ear hole is high.

[Citation List]

[Patent Literature]

[PTL 1] WO 2018/198310 A
US 29019/012446 describes an in-ear audio authentication method.

[Summary of Invention]

[Technical Problem]

Strictly speaking, the echo signal to be measured in the in-ear acoustic authentication depends not only on the acoustic characteristic of the ear hole of the subject but also on the acoustic characteristic of the earphone-type device (referred to as an audio device) used for authentication. Therefore, the accuracy of authenticating the subject may vary depending on which audio device is used.

The disclosure has been made in view of the above problems, and an object thereof is to provide an in-ear acoustic authentication device, an in-ear acoustic authentication method, and a recording medium capable of accurately authenticating a subject regardless of which audio device is used for the in-ear acoustic authentication.

[Solution to Problem]

An in-ear acoustic authentication device according to an aspect of the disclosure includes a feature extraction means configured to input an inspection signal to an ear of a subject by using an audio device, and when receiving an echo signal from the subject, extract, from the echo signal, a first feature related to a system including the audio device and an ear of the subject, a correction means configured to correct the first feature to a second feature in a case where the audio device is a predetermined reference device, and an authentication means configured to authenticate the subject by collating the second feature with a feature indicated in a pre-registered authentication information.

An in-ear acoustic authentication method according to an aspect of the disclosure includes inputting an inspection signal to an ear of a subject by using an audio device, and when receiving an echo signal from the subject, extracting, from the echo signal, a first feature related to a system including the audio device and an ear of the subject,

correcting the first feature to a second feature in a case where the audio device is a predetermined reference device, and authenticating the subject by collating the second feature with a feature indicated in a pre-registered authentication information.

A recording medium according to an aspect of the disclosure stores a program for causing a computer to execute inputting an inspection signal to an ear of a subject by using an audio device, and when receiving an echo signal from the subject, extracting, from the echo signal, a first feature related to a system including the audio device and an ear of the subject, correcting the first feature to a second feature in a case where the audio device is a predetermined reference device, and authenticating the subject by collating the second feature with a feature indicated in a pre-registered authentication information.

[Advantageous Effects of Invention]

According to an aspect of the disclosure, it is possible to accurately authenticate the subject regardless of which audio device is used for the in-ear acoustic authentication.

[Brief Description of Drawings]

Fig. 1 is a block diagram illustrating a configuration of an in-ear acoustic authentication device according to a first example embodiment.
Fig. 2 is a flowchart illustrating a flow of processing executed by the in-ear acoustic authentication device according to the first example embodiment.
Fig. 3 is a diagram schematically illustrating a configuration of a system according to a third example embodiment.
Fig. 4 is a block diagram illustrating a configuration of an in-ear acoustic authentication device according to the third example embodiment.
Fig. 5 is a flowchart illustrating a flow of processing executed by a filter generating unit of the in-ear acoustic authentication device according to the third example embodiment.
Fig. 6 is a flowchart illustrating a flow of processing executed by the in-ear acoustic authentication device according to the third example embodiment.
Fig. 7 is a block diagram illustrating a configuration of an in-ear acoustic authentication device according to a fourth example embodiment.
Fig. 8 is a flowchart illustrating a flow of processing executed by a registration unit of the in-ear acoustic authentication device according to the fourth example embodiment.
Fig. 9 is a diagram illustrating a hardware configuration of the in-ear acoustic authentication device according to the first to fourth example embodiments.

[Example Embodiment]

[First example embodiment]

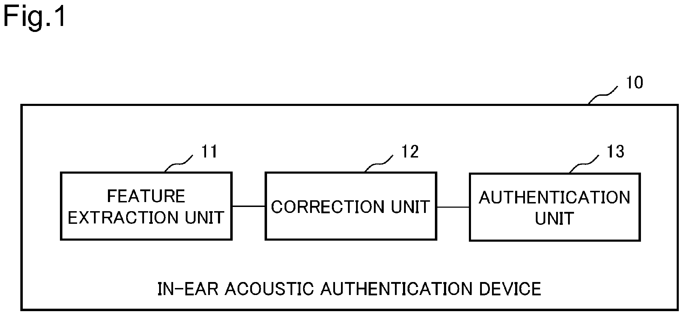

The first example embodiment will be described with reference to Figs. 1 to 2.

(In-ear acoustic authentication device 10)

An in-ear acoustic authentication device 10 according to the first example embodiment will be described with reference to Fig. 1. Fig. 1 is a block diagram illustrating a configuration of the in-ear acoustic authentication device 10. As illustrated in Fig. 1, the in-ear acoustic authentication device 10 includes a feature extraction unit 11, a correction unit 12, and an authentication unit 13.

The feature extraction unit 11 inputs the inspection signal to the ear of the subject using the audio device, and when receiving an echo signal from the subject, extracts, from the echo signal, a first feature related to a system including the audio device and the ear of the subject.

Specifically, the audio device is worn on the ear of the subject in advance. The feature extraction unit 11 causes the audio device to output the inspection signal. The inspection signal is, for example, an impulse wave. The inspection signal reverberates in a closed system including the audio device and the subject's ear. The audio device detects an echo signal output from the ear of the subject.

The feature extraction unit 11 communicates with the audio device and receives an echo signal from the audio device in a wired or wireless manner. The feature extraction unit 11 extracts an impulse response from the echo signal. The impulse response is a response to an inspection signal that is an impulse wave. The feature extraction unit 11 performs Fourier transform or Laplace transform on the impulse response. As a result, the feature extraction unit 11 calculates a transfer function indicating an acoustic characteristic of the closed system including the audio device and the ear of the subject. The transfer function is an example of an acoustic characteristic, and the acoustic characteristic is an example of a first feature. Alternatively, the feature extraction unit 11 may extract, as the first feature, another response function based on the echo signal instead of the transfer function. The feature extraction unit 11 transmits the first feature to the correction unit 12.

The correction unit 12 corrects the first feature to a second feature in a case where the audio device is a predetermined reference device.

Specifically, the correction unit 12 receives the first feature from the feature extraction unit 11. As described above, in an example, the first feature is an acoustic characteristic related to a closed system including an audio device and an ear of a subject. The correction unit 12 corrects the first feature to a second feature that will be obtained from a closed system including a predetermined reference device and an ear of the subject. In other words, the correction unit 12 calculates, as the second feature, an acoustic characteristic obtained in a case where the condition regarding the subject does not change and the audio device is replaced with the reference device.

The correction of the first feature will be described by adding a little more. The acoustic characteristic that is the first feature can be separately expressed as (acoustic characteristic with an audio device as a factor) and (acoustic characteristic with a subject as a factor) in a mathematical expression. For each audio device, it is possible to extract an acoustic characteristic with the audio device as a factor from the acoustic characteristic that is the first feature.

However, in a case where it is assumed that the subject uses a wide variety of audio devices for the in-ear acoustic authentication, it may not be realistic to obtain in advance the acoustic characteristics related to the closed system including the audio device and the ear of the subject for all sets of the audio devices and the subject.

Therefore, in order to correct the acoustic characteristics related to the closed system including the audio device and the ear of the subject to the acoustic characteristics related to the closed system including the reference device and the ear of the subject, a parameter representing a relationship between (the acoustic characteristic with the audio device as a factor) and (the acoustic characteristic with a predetermined reference device as a factor) is calculated in advance. Specifically, this parameter is expressed as (the acoustic characteristic with a predetermined reference device as a factor)/(the acoustic characteristic with an audio device as a factor). This parameter does not include the acoustic characteristic with the subject as a factor. Therefore, this parameter can be used regardless of the subject.

Specifically, the correction unit 12 corrects the first feature including (the acoustic characteristic with the audio device as a factor) and (the acoustic characteristic with the subject as a factor) to the second feature including (the acoustic characteristic with the reference device as a factor) and (the acoustic characteristic with the subject as a factor) using the above relational expression. Details of the relational expression described here will be described in more detail in the third example embodiment.

Alternatively, each of the first feature and the second feature may be information (data) useful for authenticating the subject, extracted from the acoustic characteristics, instead of the acoustic characteristics themselves. In this case, the correction unit 12 extracts the first feature from the acoustic characteristic obtained from the closed system including the audio device and the ear of the subject. For example, the first feature may be a mel-frequency cepstrum coefficient (MFCC). The correction unit 12 corrects the first feature to the second feature. In this case, the second feature is the same kind of feature as the first feature, extracted from the acoustic characteristic obtained from the closed system including the predetermined reference device and the subject's ear.

The authentication unit 13 authenticates the subject by collating the second feature with a feature indicated in authentication information registered in advance.

Specifically, the authentication unit 13 receives information indicating the second feature from the correction unit 12. The authentication unit 13 collates the second feature with a feature (authentication information) of a person registered in advance. The authentication unit 13 calculates similarity (for example, a function of the distance in the feature amount space) between the second feature and the feature of the person registered in advance. When the calculated similarity exceeds the threshold value, the authentication unit 13 determines that the subject and the person registered in advance are the same person (authentication succeeds). On the other hand, when the similarity is equal to or less than the threshold value, the authentication unit 13 determines that the subject and the person registered in advance are not the same person (authentication fails).

The authentication unit 13 may present the authentication result on a display or the like by outputting the authentication result.

(Operation of in-ear acoustic authentication device 10)

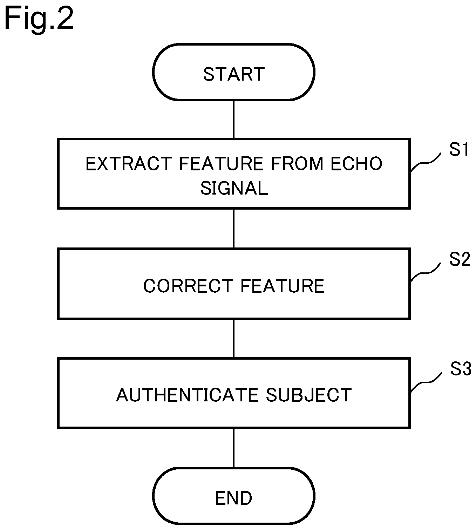

The operation of the in-ear acoustic authentication device 10 according to the first example embodiment will be described with reference to Fig. 2. Fig. 2 is a flowchart illustrating a flow of processing executed by the in-ear acoustic authentication device 10.

As illustrated in Fig. 2, the feature extraction unit 11 inputs the inspection signal to the ear of the subject using the audio device, and when receiving an echo signal from the subject, extracts, from the echo signal, a first feature related to a system including the audio device and the ear of the subject (S1). The feature extraction unit 11 transmits information indicating the first feature to the correction unit 12.

The correction unit 12 receives information indicating the first feature from the feature extraction unit 11. The correction unit 12 corrects the first feature to the second feature in a case where the audio device is a predetermined reference device (S2). The correction unit 12 transmits information indicating the second feature to the authentication unit 13.

The authentication unit 13 receives the information indicating the second feature from the correction unit 12. The authentication unit 13 authenticates the subject by collating the second feature with a feature indicated in authentication information registered in advance (S3). Thereafter, the authentication unit 13 outputs an authentication result.

As described above, the operation of the in-ear acoustic authentication device 10 according to the first example embodiment ends.

(Effects of example embodiment)

According to the configuration of the example embodiment, the feature extraction unit 11 inputs the inspection signal to the ear of the subject using the audio device, and when receiving an echo signal from the subject, extracts, from the echo signal, a first feature related to a system including the audio device and the ear of the subject. The correction unit 12 corrects the first feature to a second feature in a case where the audio device is a predetermined reference device. The authentication unit 13 authenticates the subject by collating the second feature with authentication information registered in advance.

In other words, the in-ear acoustic authentication device 10 performs the in-ear acoustic authentication based on not the first feature with the audio device as a factor but the second feature in a case where the audio device is the predetermined reference device. Therefore, it is possible to accurately authenticate the subject regardless of which audio device is used for the in-ear acoustic authentication.

[Second example embodiment]

In the second example embodiment, the configuration of the in-ear acoustic authentication device 10 is as described in the first example embodiment. Hereinafter, only differences between the second example embodiment and the first example embodiment will be described.

For the purpose of authenticating the subject based on the second feature, the acoustic characteristic with the audio device as a factor is noise. That is, in a case where the in-ear acoustic authentication is performed based on the second feature described in the first example embodiment, there is a possibility that the authentication accuracy varies among individual audio devices. In consideration of this, in the second example embodiment, the correction unit 12 of the in-ear acoustic authentication device 10 corrects the first feature to another first feature. Here, the first feature is the acoustic characteristic itself for the closed system including the audio device and the subject's ear. Alternatively, the first feature is a feature extracted from the acoustic characteristic. "The another first feature" is different from the first feature described in the first example embodiment, but is included in the concept of the first feature of the disclosure. The second feature can also be corrected using the method described below. In this case, in the following description, the "(original) first feature" is replaced with the "(original) second feature".

In the second example embodiment, the correction unit 12 corrects the first feature to another first feature. Specifically, in the first example embodiment, the correction unit 12 converts (scales) the original first feature into another first feature based on the following mathematical expression. Hereinafter, correction may be described in the sense of conversion (scaling).

[Math 1]

$$MY_{tar} = (Y_{tar} - \mu_{tar}) \div \sigma_{tar} \qquad \cdots \qquad (1)$$

where $\mu_{tar}$ is an average of features obtained from a closed system including an audio device and ears of respective persons for a combination of the audio device and a plurality of different persons. $\sigma_{tar}$ is a standard deviation of the features obtained from the closed system including the audio device and the ears of respective persons for a combination of the audio device and a plurality of different persons. The plurality of different persons may or may not include the subject. Another first feature $MY_{tar}$ shown in Expression (1) schematically indicates that attention is paid to how far the first feature $Y_{tar}$ deviates from the average $\mu_{tar}$.

$\mu_{tar}$ means an average of features extracted from the corrected acoustic characteristics when a plurality of persons is authenticated using an audio device. In Expression (1), the acoustic characteristic with the audio device as a factor is included in $Y_{tar}$ and $\mu_{tar}$ in common. Therefore, by the calculation of $(Y_{tar} - \mu_{tar})$ in the above Expression, in another first feature $MY_{tar}$, the acoustic characteristic with the audio device as a factor is eliminated or is at least reduced as compared with the original first feature $Y_{tar}$.

Alternatively, the correction unit 12 may convert the first feature $Y_{tar}$ into another first feature $MY_{tar}'$ based on the following Expression (2) instead of the above-described Expression (1).

[Math 2]

$$MY_{tar}' = \{Y_{tar} - \mu_{ref} - (F_{ref} - F_{tar})\} \div \sigma_{ref} \qquad \cdots \qquad (2)$$

where $\mu_{ref}$ is an average of features obtained from a closed system including an audio device and ears of respective persons for a combination of the reference device and a plurality of different persons. $F_{ref}$ is a feature obtained from a closed system including a reference device and an ear of a specific person. $F_{tar}$ is a feature obtained from a closed system including an audio device and an ear of a specific person. The specific person is one person different from the subject. The reference device may be one audio device or may be virtually a combination of a plurality of audio devices. In a case where the reference device is a combination of a plurality of (M > 1) audio devices, a value ($\mu_{vref}$) obtained by dividing the sum of the averages of the features of the respective audio devices by M is replaced with $\mu_{ref}$ in Expression (2). In this case, a value ($\sigma_{vref}$) obtained by dividing the sum of the standard deviations of the features for the respective audio devices by M is replaced with $\sigma_{ref}$ in Expression (2).

Referring to the right side of Expression (2), the original first feature $Y_{tar}$ has been converted (scaled) based on the average $\mu_{ref}$ of the features of the reference device. That is, another first feature $MY_{tar}'$ indicated by Expression (2) may be regarded as the scaled first feature $Y_{tar}$. Still another first feature $MY_{tar}$ may be obtained by substituting the scaled first feature $Y_{tar}$ (= $MY_{tar}'$) into Expression (1) (modification).

The correction unit 12 transmits, to the authentication unit 13, information indicating another second feature obtained from another first feature ($MY_{tar}$ or $MY_{tar}'$) obtained as described above.

In the second example embodiment, the authentication unit 13 authenticates the subject by collating another second feature obtained from another first feature with authentication information registered in advance. That is, the authentication unit 13 calculates the similarity between another second feature and the feature of the person registered in advance. When the similarity exceeds the threshold value, the authentication unit 13 determines that the subject and the person registered in advance are the same person (authentication succeeds). On the other hand, when the similarity is equal to or less than the threshold value, the authentication unit 13 determines that the subject and the person registered in advance are not the same person (authentication fails).

(Effects of example embodiment)

According to the configuration of the example embodiment, the feature extraction unit 11 inputs the inspection signal to the ear of the subject using the audio device, and when receiving an echo signal from the subject, extracts, from the echo signal, a first feature related to a system including the audio device and the ear of the subject. The correction unit 12 corrects the first feature to a second feature in a case where the audio device is a predetermined reference device. The authentication unit 13 authenticates the subject by collating another second feature with authentication information registered in advance.

That is, the in-ear acoustic authentication device 10 performs the in-ear acoustic authentication based on not the first feature with the audio device as a factor but the another second feature in a case where the audio device is the predetermined reference device. Therefore, it is possible to accurately authenticate the subject regardless of which audio device is used for the in-ear acoustic authentication.

Furthermore, when the acoustic characteristic with the audio device as a factor is regarded as noise, the second feature varies due to noise for each individual audio device. In view of this, in the example embodiment, the in-ear acoustic authentication device 10 corrects the first feature to the another first feature described above. Thereby, in another first feature, the acoustic characteristic with the audio device as a factor is eliminated or at least reduced compared to the original first feature.

(Modification)

In a modification, another first feature $MY_{tar}'$ indicated by the foregoing Expression (2) is regarded as the scaled first feature $Y_{tar}$. In the modification, $MY_{tar}'$ expressed in Expression (2) is introduced as $Y_{tar}$ in the right side of Expression (1). However, in this case, $\mu_{tar}$ and $\sigma_{tar}$ of Expression (1) also need to be scaled as in $Y_{tar}$ based on the average $\mu_{ref}$ of the features of the reference devices.

In the modification, the above-described Expression (1) is modified as the following Expression (1)'.
[Math 3]

$$MY_{tar} = (Y_{tar}' - \mu_{tar}') \div \sigma_{tar}' \qquad \cdots \qquad (1)'$$

where the second feature $Y_{tar}'$ is equal to $MY_{tar}'$ expressed in the above-described Expression (2). $\mu_{tar}'$ is obtained by recalculating the above-described $\mu_{tar}$ in association with the scaling of the second feature $Y_{tar}$. $\sigma_{tar}'$ is obtained by recalculating the above-described $\sigma_{tar}$ in association with the scaling of the second feature $Y_{tar}$.

According to the configuration of the modification, the second feature $Y_{tar}$ is scaled based on the average $\mu_{ref}$ of the features of the reference devices according to the calculation formula indicated in the right side of Expression (2). Another first feature $MY_{tar}$ is calculated from the scaled second feature $Y_{tar}'$ according to Expression (1)'. In this way, the another first feature $MY_{tar}$ may be obtained from the scaled first feature $Y_{tar}'$.

[Third example embodiment]

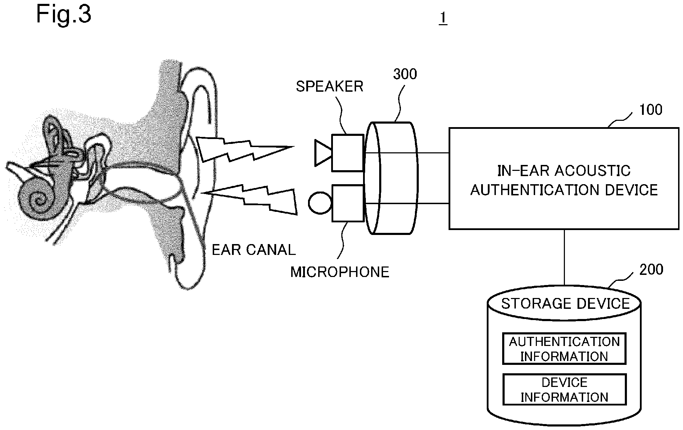

The third example embodiment will be described with reference to Figs. 3 to 6.

(System 1)

Fig. 3 is a diagram schematically illustrating a configuration of a system 1 according to the third example embodiment. In Fig. 3, the system 1 includes an in-ear acoustic authentication device 100, a storage device 200, and an audio device 300. The in-ear acoustic authentication device 100, the storage device 200, and the audio device 300 may be part of the authentication device for the in-ear acoustic authentication.

Alternatively, the in-ear acoustic authentication device 100 and the storage device 200 may be on a network server. In this case, the audio device 300, the in-ear acoustic authentication device 100, and the storage device 200 are communicably connected by radio, for example, a mobile network. Alternatively, only the storage device 200 may be on the network server. In this case, the in-ear acoustic authentication device 100 and the audio device 300 are part of the authentication device, and the in-ear acoustic authentication device 100 and the storage device 200 are communicably connected by a wireless network.

The audio device 300 generates the inspection signal to transmit the inspection signal from the speaker (Fig. 3) of the audio device 300 toward the ear of the subject. As in the first example embodiment, the inspection signal is, for example, an impulse wave. The audio device 300 transmits the transmitted inspection signal to a feature extraction unit 103 of the in-ear acoustic authentication device 100.

The audio device 300 observes an echo signal from the subject. Specifically, the audio device 300 detects an echo signal from the subject using the microphone (Fig. 3) of the audio device 300 to transmit the detected echo signal to the feature extraction unit 103 of the in-ear acoustic authentication device 100.

(In-ear acoustic authentication device 100)

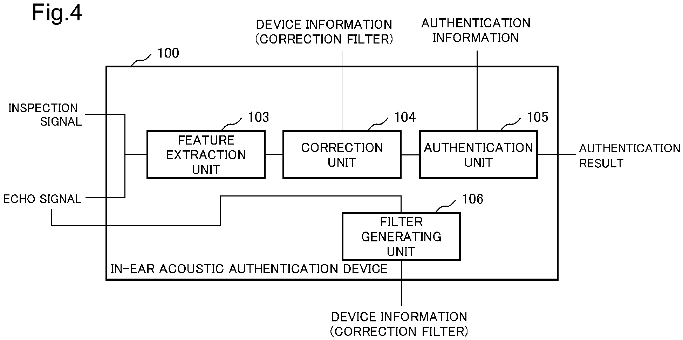

A configuration of the in-ear acoustic authentication device 100 according to the third example embodiment will be described with reference to Fig. 4. Fig. 4 is a block diagram illustrating a configuration of the in-ear acoustic authentication device 100. As illustrated in Fig. 4, the in-ear acoustic authentication device 100 includes a filter generating unit 106 in addition to the feature extraction unit 103, a correction unit 104, and an authentication unit 105. The in-ear acoustic authentication device 100 may further include an audio device control unit (not illustrated). In this case, all or some of the operations of the audio device 300 described above is controlled by the audio device control unit of the in-ear acoustic authentication device 100.

The feature extraction unit 103 inputs the inspection signal to the ear of the subject using the audio device 300, and when receiving an echo signal from the subject, extracts, from the echo signal, a first feature related to a system including the audio device 300 and the ear of the subject.

Specifically, the audio device 300 is worn on the ear of the subject in advance. The feature extraction unit 103 controls the audio device 300 to output an inspection signal. The inspection signal is, for example, an impulse wave. The inspection signal reverberates in a closed system including the audio device 300 and the subject's ear. The audio device 300 detects an echo signal output from the ear of the subject.

The feature extraction unit 103 communicates with the audio device 300 and receives an echo signal from the audio device 300 in a wired or wireless manner. The feature extraction unit 103 extracts an impulse response from the echo signal. The feature extraction unit 11 calculates a transfer function indicating an acoustic characteristic of a closed system including the audio device 300 and the ear of the subject by performing Fourier transform or Laplace transform on the impulse response. The acoustic characteristic and the transfer function are examples of the first feature. Alternatively, the feature extraction unit 103 may extract, as the first feature, another response function based on the echo signal instead of the transfer function. The feature extraction unit 103 transmits the first feature to the correction unit 104.

The correction unit 104 corrects the first feature to a second feature in a case where the audio device 300 is a predetermined reference device.

Specifically, the correction unit 104 receives the first feature from the feature extraction unit 103. The correction unit 104 corrects the first feature to the second feature that will be obtained from a closed system including a predetermined reference device and an ear of the subject. In other words, the correction unit 104 calculates, as the second feature, an acoustic characteristic obtained in a case where the condition regarding the subject does not change and the audio device 300 is replaced with the reference device. Alternatively, the correction unit 104 may correct the second feature to another first feature, as in the correction unit 12 according to the second example embodiment. In this case, in the following description, the "second feature" is replaced with "another first feature".

The first feature and the second feature described above will be additionally described. Here, the acoustic characteristic as the first feature is assumed to be a transfer function of a system including an audio device and an ear of a subject. When the subject wears the audio device, the audio device and the ear hole of the subject can be regarded as one sound system. In this case, as is well known, the acoustic characteristic of the entire acoustic system, that is, the acoustic characteristic that is the first feature, is represented by a product of the acoustic characteristic with the audio device as a factor and the acoustic characteristic with the subject as a factor. The transfer function is an example of acoustic characteristics. Alternatively, the feature extraction unit 103 may extract, as the first feature, another response function based on the echo signal instead of the transfer function. Hereinafter, a case where the acoustic characteristic as an example of the first feature is a transfer function will be described. Specifically, the acoustic characteristic (an example of the first feature) as the first feature is expressed by the following mathematical expression. In Expression (3), $\omega$ is the acoustic frequency.

[Math 4]

$$G_{tar} = D_{tar}(\omega) \cdot p(\omega) \quad \cdots (3)$$

In Expression (3), $G_{tar}$ is defined as an acoustic characteristic that is a first feature of a system including the audio device 300 and the ear of a specific person. $D_{tar}(\omega)$ is defined as an acoustic characteristic with the audio device 300 as a factor. $p(\omega)$ is defined as an acoustic characteristic with the subject as a factor.

The feature extraction unit 103 calculates an acoustic characteristic of a system including the audio device 300 and the ear of the subject. That is, the first feature is $G_{tar}$ of Expression (3).

Here, the acoustic characteristic as the second feature is assumed to be a transfer function of a system including the reference device and the ear of the subject. In this case, the acoustic characteristic that is the second feature is represented by a product of an acoustic characteristic with the reference device as a factor and an acoustic characteristic with the subject as a factor. Specifically, the acoustic characteristic (an example of the second feature) calculated by the correction unit 104 is expressed by the following mathematical expression. In Expression (4), $\omega$ is the acoustic frequency.

[Math 5]

$$G_{ref} = D_{ref}(\omega) \cdot p(\omega) \quad \cdots (4)$$

In Expression (4), $G_{ref}$ is defined as an acoustic characteristic that is a second feature of a system including a reference device and an ear of a specific person. $D_{ref}$ is defined as an acoustic characteristic with the reference device as a factor. As described above, p is an acoustic characteristic with the subject as a factor. The first feature and the second feature are not limited to transfer functions. The first feature may be an acoustic characteristic different from the transfer function as long as the first feature is expressed in the form of Expression (3) described above. The second feature may be an acoustic characteristic different from the transfer function as long as the second characteristic is expressed in the form of the above-described expression (4).

The filter generating unit 106 generates a correction filter that is a ratio between the acoustic characteristic with the audio device 300 as a factor and the acoustic characteristic with the reference device as a factor. Then, the filter generating unit 106 stores the calculated correction filter as device information in the storage device 200 of the system 1.

(Generation of correction filter)

A procedure in which the filter generating unit 106 according to the third example embodiment generates the above-described correction filter will be described. For example, a correction filter for the audio device 300 is generated by the filter generating unit 106 for each type, each production lot, or each manufacturer of the audio device 300.

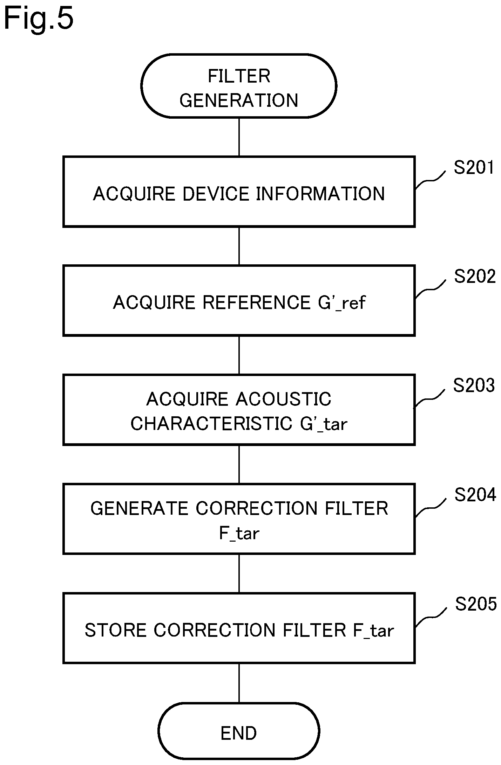

Fig. 5 is a flowchart illustrating a flow of processing executed by the filter generating unit 106. Here, it is assumed that device information indicating the acoustic characteristic (G'$_{ref}$) related to a system including a reference device and a specific person is registered in advance in the storage device 200 of the system 1. The specific person may be or may not be the subject.

As illustrated in Fig. 5, the filter generating unit 106 first acquires device information related to the audio device 300 from the storage device 200 of the system 1 (S201). The filter generating unit 106 includes the acoustic characteristic (G'$_{tar}$) related to a system including the audio device 300 and a specific person from the device information. The filter generating unit 106 acquires the acoustic characteristic (G'$_{ref}$) related to a system including a reference device and a specific person (S202).

The following parameter F$_{tar}$ indicating the relationship between the acoustic characteristic G'$_{tar}$ and the acoustic characteristic G'$_{ref}$ is defined. G'$_{tar}$ is obtained by replacing the acoustic characteristic p($\omega$) with the subject as a factor with the acoustic characteristic p'($\omega$) with the specific person as a factor in Expression (3). G'$_{ref}$ is obtained by replacing the acoustic characteristic p($\omega$) with the subject as a factor with the acoustic characteristic p'($\omega$) with the specific person as a factor in Expression (4).

[Math 6]

$$F_{tar} = \frac{G'_{ref}}{G'_{tar}} \cdots (5)$$

G'$_{tar}$, with p($\omega$) replaced with p'($\omega$) in Expression (3), and G'$_{ref}$, with p($\omega$) replaced with p'($\omega$) in Expression (4) are substituted into Expression (5).

[Math 7]

$$F_{tar} = \frac{G'_{ref}}{G'_{tar}} = \frac{D_{ref}(\omega) \cdot p'(\omega)}{D_{tar}(\omega) \cdot p'(\omega)} = \frac{D_{ref}}{D_{tar}} \cdots (6)$$

In Expression (6), D$_{tar}$($\omega$) is an acoustic characteristic with the audio device 300 as a factor. p'($\omega$) is an acoustic characteristic with the specific person as a factor. As described above, the specific person may be determined independently of the subject.

That is, the parameter F$_{tar}$ represents a relationship between the acoustic characteristic D$_{ref}$ with the reference device as a factor and the acoustic characteristic D$_{tar}$ with the audio device 300 as a factor. In a case where the parameter F$_{tar}$ is applied to G$_{tar}$, the acoustic characteristic D$_{tar}$ with the audio device 300 as a factor is removed (filtered out). In this sense, hereinafter, the parameter F$_{tar}$ is referred to as a correction filter. The correction filter F$_{tar}$ is a ratio between the acoustic characteristic D$_{tar}$ with the audio device 300 as a factor and the acoustic characteristic D$_{ref}$ with the reference device as a factor.

The acoustic characteristic G'$_{tar}$ of the system including the audio device 300 and the ear of the specific person is calculated under the same condition as when the acoustic characteristic G$_{ref}$ of the system including the reference device and the ear of the specific person is calculated. Specifically, the same person as the specific person for which the acoustic characteristic G$_{ref}$ is calculated wears the audio device 300. The audio device 300 transmits from the speaker the same inspection signal as that when the acoustic characteristic G$_{ref}$ is calculated. The audio device 300 observes the echo signal from the ear of the specific person using the microphone of the audio device 300. The audio device 300 transmits the observed echo signal to the filter generating unit 106.

The filter generating unit 106 acquires the acoustic characteristic G'$_{tar}$ of the system including the audio device 300 and the ear of the specific person based on the known inspection signal and the echo signal received from the audio device 300 (S203).

The filter generating unit 106 generates the correction filter F$_{tar}$ related to the combination of the reference device and the audio device 300 based on the above-described Expression (6) (S204). Then, the filter generating unit 106 stores the calculated correction filter F$_{tar}$ as the device information in the storage device 200 of the system 1 (S205).

Thus, the generation of the correction filter ends.

The correction unit 104 illustrated in Fig. 4 acquires the device information stored in the storage device 200 of the system 1, and corrects the first feature (G$_{tar}$) to the second feature (G$_{ref}$) using the correction filter F$_{tar}$ illustrated in Expression (6). That is, the correction unit 104 performs the following calculation.

[Math 8]

$$F_{tar} \cdot G_{tar} = \frac{D_{ref}}{D_{tar}} \cdot \left( D_{tar}(\omega) \cdot p(\omega) \right) = D_{ref} \cdot p(\omega) = G_{ref}$$

The correction unit 104 transmits information indicating the second feature ($G_{ref}$) calculated in this manner to the authentication unit 105.

The authentication unit 105 authenticates the subject by collating the second feature with a feature indicated in authentication information registered in advance.

Specifically, the authentication unit 105 receives information indicating the second feature from the correction unit 104. The authentication unit 105 collates the second feature with a feature (authentication information) of a person registered in advance. The authentication unit 105 calculates the similarity (for example, the mel-frequency cepstrum coefficient (MFCC)) between the second feature and the feature of the person registered in advance. When the similarity exceeds the threshold value, the authentication unit 105 determines that the subject and the person registered in advance are the same person (authentication succeeds). On the other hand, when the similarity is equal to or less than the threshold value, the authentication unit 105 determines that the subject and the person registered in advance are not the same person (authentication failure).

The authentication unit 105 outputs an authentication result. For example, the authentication unit 105 may cause a display device (not illustrated) to display information indicating whether the authentication succeeds or fails.

(Modification)

A modification related to the generation of the correction filter by the filter generating unit 106 will be described.

In the modification, p'($\omega$) in Expression (6) relates to a plurality of persons. In other words, the specific person described above is virtually a combination of a plurality of persons. Specifically, in a plurality of systems including the reference device and ears of a plurality of persons, the acoustic characteristic with each person as a factor is assumed as $p_i$ (i = 1, 2, ...). In this case, the correction filter $F_{tar}$ is obtained as follows.

[Math 9]

$$F_{tar}(\omega) = \frac{G'_{ref}}{G'_{tar}} = \frac{\sum_i D_{ref}(\omega) \cdot p_i(\omega)}{\sum_i D_{tar}(\omega) \cdot p_i(\omega)} = \frac{D_{ref}(\omega) \cdot \sum_i p_i(\omega)}{D_{tar}(\omega) \cdot \sum_i p_i(\omega)} = \frac{D_{ref}}{D_{tar}} \cdots (6)'$$

According to Expression (6)', the acoustic characteristics $G_{ref}$ of the system including the reference device and the ears of specific persons (related to a plurality of persons in the modification) can be separated into the acoustic characteristic $D_{ref}$ with the reference device as a factor and the sum of the acoustic characteristics $p_i$ (i = 1, 2, ...) with a plurality of persons as factors. The acoustic characteristics $G'_{tar}$ of the system including the audio device 300 and the ears of specific persons (related to a plurality of persons in the modification) can be separated into the acoustic characteristic $D_{tar}$ with the audio device 300 as a factor and the sum of the acoustic characteristics $p_i$ (i = 1, 2, ...) with a plurality of persons as factors. The reference device may be virtually a combination of a plurality of (N > 1) audio devices 300. In this case, a value ($D_{vref}$) obtained by dividing the sum of the acoustic characteristics $D_{ref}$ with respective audio devices 300 as factors by N is replaced with $D_{ref}$ of Expression (6)'.

The right side of Expression (6)' according to the modification is the same as the right side of Expression (6) described above. This is because the sum of the acoustic characteristics $p_i$ (i = 1, 2, ...) with a plurality of persons as factors is canceled out between the denominator and the numerator at the second from the right in Expression (6)'. That is, in the modification, the process of calculating the correction filter $F_{tar}$ is different, but the correction filter $F_{tar}$ obtained by Expression (6)' is the same as the correction filter $F_{tar}$ obtained by Expression (6).

In the modification, the sum (or the average) of the acoustic characteristics $p_i$ (i = 1, 2, ...) with a plurality of persons as factors can be related to the acoustic characteristic with a virtual specific person as a factor. Therefore, it can be expected that fluctuation (noise) of the measurement value of the acoustic characteristic with each person as a factor is offset.

(Operation of in-ear acoustic authentication Device 100)

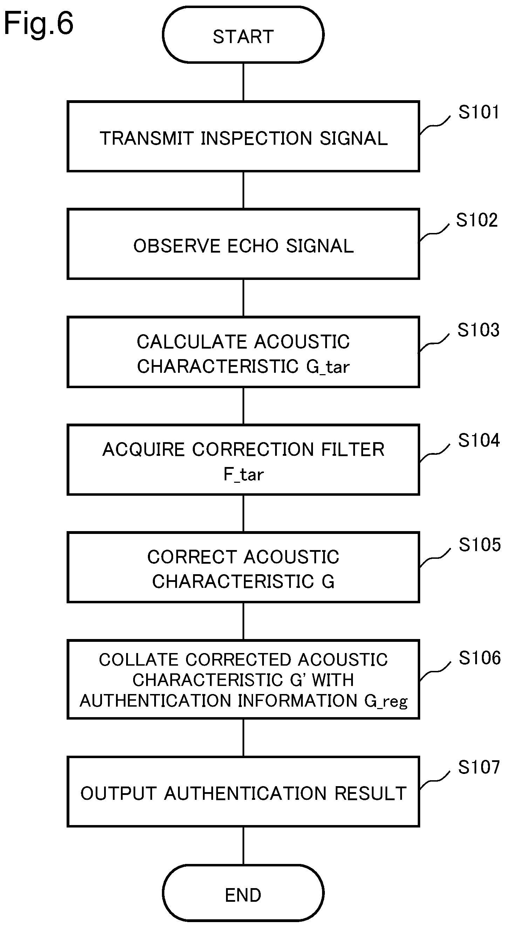

The operation of the in-ear acoustic authentication device 100 according to the second example embodiment will be described with reference to Fig. 6. Fig. 6 is a flowchart illustrating a flow of processing executed by the in-ear acoustic authentication device 100.

As illustrated in Fig. 6, the audio device 300 generates the inspection signal to transmit the inspection signal from the speaker (Fig. 3) of the audio device 300 toward the ear of the subject (S101). The audio device 300 transmits the transmitted inspection signal to the feature extraction unit 103.

The audio device 300 observes an echo signal from the subject (S102). The audio device 300 transmits the observed echo signal to the feature extraction unit 103.

The feature extraction unit 103 inputs the inspection signal to the ear of the subject using the audio device 300, and when receiving an echo signal from the subject, extracts, from the echo signal, a first feature related to a system including the audio device 300 and the ear of the subject. Specifically, the feature extraction unit 103 calculates the acoustic characteristic $G_{tar}$, which is the first feature, based on the inspection signal and the echo signal (S103). The feature extraction unit 103 transmits information indicating the first feature to the correction unit 104.

The correction unit 104 receives information indicating the first feature from the feature extraction unit 11. The correction unit 104 corrects the first feature to a second feature in a case where the audio device 300 is a predetermined reference device.

Specifically, the correction unit 104 acquires the correction filter $F_{tar}$ stored as the device information in the storage device 200 (S104).

Then, the correction unit 104 corrects the acoustic characteristic $G_{tar}$ (first feature) to the acoustic characteristic $G_{ref}$ (second feature) using the correction filter $F_{tar}$ (S105). The correction unit 104 transmits information indicating the second feature to the authentication unit 105.

The authentication unit 105 receives the information indicating the second feature from the correction unit 12. The authentication unit 105 authenticates the subject by collating the second feature with a feature indicated in authentication information registered in advance (S106). Thereafter, the authentication unit 105 outputs an authentication result (S107).

As described above, the operation of the in-ear acoustic authentication device 100 according to the second example embodiment ends.

(Effects of example embodiment)

According to the configuration of the example embodiment, the feature extraction unit 103 inputs the inspection signal to the ear of the subject using the audio device 300, and when receiving an echo signal from the subject, extracts, from the echo signal, a first feature related to a system including the audio device 300 and the ear of the subject. The correction unit 104 corrects the first feature to a second feature in a case where the audio device 300 is a predetermined reference device. The authentication unit 105 authenticates the subject by collating the second feature with a feature indicated in authentication information registered in advance.

That is, the in-ear acoustic authentication device 100 performs the in-ear acoustic authentication based on not the first feature with the audio device 300 as a factor but the second feature in a case where the audio device 300 is a predetermined reference device. Therefore, it is possible to accurately authenticate the subject regardless of which audio device 300 is used for the in-ear acoustic authentication.

Furthermore, the filter generating unit 106 generates the correction filter $F_{tar}$ that is a ratio between the acoustic characteristic $G'_{tar}$ of the system including the audio device 300 and the ear of the specific person and the acoustic characteristic $G_{ref}$ of the system including the reference device and the ear of the specific person. As a result, the correction unit 104 can correct the acoustic characteristic $G'_{tar}$ as the first feature to the second feature $G_{ref}$ in a case where the audio device 300 is the predetermined reference device, using the correction filter $F_{tar}$.

[Fourth example embodiment]

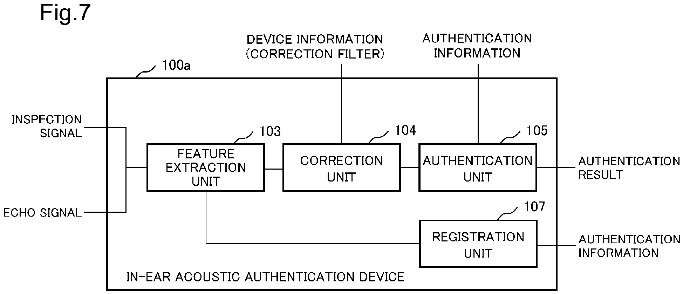

The fourth example embodiment will be described with reference to Figs. 7 to 8.

(In-ear acoustic authentication device 100a)

A configuration of an in-ear acoustic authentication device 100a according to the fourth example embodiment will be described with reference to Fig. 7. Fig. 7 is a block diagram illustrating a configuration of the in-ear acoustic authentication device 100a. As illustrated in Fig. 7, the in-ear acoustic authentication device 100a includes a registration unit 107 in addition to the feature extraction unit 103, the correction unit 104, and the authentication unit 105. The in-ear acoustic authentication device 100a may further include an audio device control unit (not illustrated). In this case, all or some of the operations of the audio device 300 (Fig. 3) to be described later is controlled by the audio device control unit of the in-ear acoustic authentication device 100a.

In a case where the subject is a registered subject, the registration unit 107 registers the second feature corrected by the correction unit 104 as authentication information in association with the subject.

Processes executed by the feature extraction unit 103, the correction unit 104, and the authentication unit 105 of the in-ear acoustic authentication device 100a according to the fourth example embodiment are similar to those of the in-ear acoustic authentication device 100 according to the third example embodiment unless otherwise described below.

(Operation of in-ear acoustic authentication Device 100a)

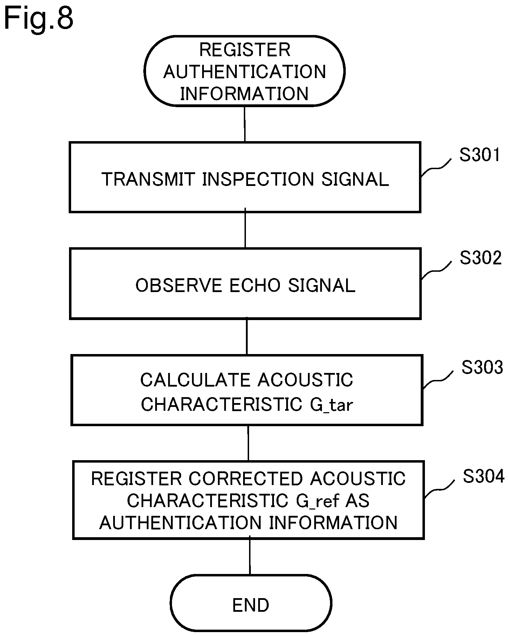

The operation of the in-ear acoustic authentication device 100a according to the fourth example embodiment will be described with reference to Fig. 8. Fig. 8 is a flowchart illustrating a flow of processing executed by the in-ear acoustic authentication device 100a.

As illustrated in Fig. 8, the audio device 300 generates the inspection signal to transmit the inspection signal from the speaker (Fig. 3) of the reference device toward the ear of the subject (S301). The reference device transmits the transmitted inspection signal to the feature extraction unit 103. The reference device is a specific audio device 300 selected in advance.

The reference device observes the echo signal from the subject (S302). The audio device 300 transmits the observed echo signal to the feature extraction unit 103.

The feature extraction unit 103 inputs the inspection signal to the ear of the subject using the audio device 300, and calculates the acoustic characteristic $G_{tar}$ related to the system including the audio device 300 and the ear of the subject when receiving the echo signal from the subject (S303). The feature extraction unit 103 transmits information indicating the acoustic characteristic $G_{tar}$ to the registration unit 107.

The registration unit 107 receives information indicating the acoustic characteristic $G_{tar}$ from the feature extraction unit 103. The registration unit 107 calculates the acoustic characteristic $G_{ref}$ to be stored as the authentication information in the storage device 200 using the acoustic characteristic $G_{tar}$ and the correction filter $F_{tar}$ (S304). The acoustic characteristic $G_{ref}$ is obtained as follows.

[Math 10]

$$F_{tar}(\omega) \cdot G_{tar} = \frac{G_{ref}}{G_{tar}} \cdot G_{tar} = G_{ref} \cdots (7)$$

That is, the registration unit 107 obtains the acoustic characteristic $G_{ref}$ by multiplying the acoustic characteristic $G_{tar}$ by the correction filter $F_{tar}$. The registration unit 107 stores information indicating the acoustic characteristic $G_{ref}$ as authentication information in the storage device 200.

As described above, the operation of the in-ear acoustic authentication device 100a according to the example embodiment ends.

(Effects of example embodiment)

According to the configuration of the example embodiment, the feature extraction unit 103 inputs the inspection signal to the ear of the subject using the audio device 300, and when receiving an echo signal from the subject, extracts, from the echo signal, a first feature related to a system including the audio device 300 and the ear of the subject. The correction unit 104 corrects the first feature to a second feature in a case where the audio device 300 is a predetermined reference device. The authentication unit 105 authenticates the subject by collating another first feature with authentication information registered in advance.

That is, the in-ear acoustic authentication device 100, 100a performs the in-ear acoustic authentication based on not the first feature with the audio device 300 as a factor but another first feature in a case where the audio device 300 is a predetermined reference device. Therefore, it is possible to accurately authenticate the subject regardless of which audio device 300 is used for the in-ear acoustic authentication.

(Modification)

In a modification, a combination of the plurality of audio devices 300 is a virtual reference device. Specifically, in step S303 of the flow illustrated in Fig. 8, the feature extraction unit 103 calculates acoustic characteristic related to a system including each audio device 300 and the ear of the subject using N (>1) audio devices 300. The feature extraction unit 103 transmits information indicating the calculated acoustic characteristics to the registration unit 107. Hereinafter, the acoustic characteristic related to a system including each of the first to N-th audio devices 300 and the ear of the subject is $G_i$ (i = 1 to N).

The registration unit 107 calculates the acoustic characteristic $G_{ref}$ related to a system including the virtual reference device and the ear of the subject based on the acoustic characteristic $G_i$ (i = 1 to N). In the modification, the second feature is an average of the acoustic characteristics $G_i$ (second acoustic characteristics) (i = 1 to N) of a plurality of systems including a plurality of audio devices 300 different from each other and the ear of the subject. Specifically, the acoustic characteristic $G_{ref}$ according to the modification is expressed as follows.

[Math 11]

$$G_{ref} = \frac{1}{N}\sum_i G_i = \left\{\frac{1}{N}\sum_i D_i(\omega)\right\} \cdot p(\omega) = \overline{D_i(\omega)} \cdot p(\omega) \cdots (8)$$

where $D_i(\omega)$ is an acoustic characteristic with the i-th audio device 300 combined with the virtual reference device as a factor. $p(\omega)$ is an acoustic characteristic with the subject as a factor. $D_i(\omega)$ with an overline on the right side of Expression (8) represents an average of (some of) acoustic characteristics with the first to N-th audio devices 300 as factors.

According to Expression (8), in the modification, the average of (some of) the acoustic characteristics with the N audio devices 300 as factors relates to the acoustic characteristic with the virtual reference device as a factor. Therefore, it can be expected that fluctuation (noise) of the measurement value of the acoustic characteristic with each audio device 300 as a factor is offset.

(Regarding hardware configuration)

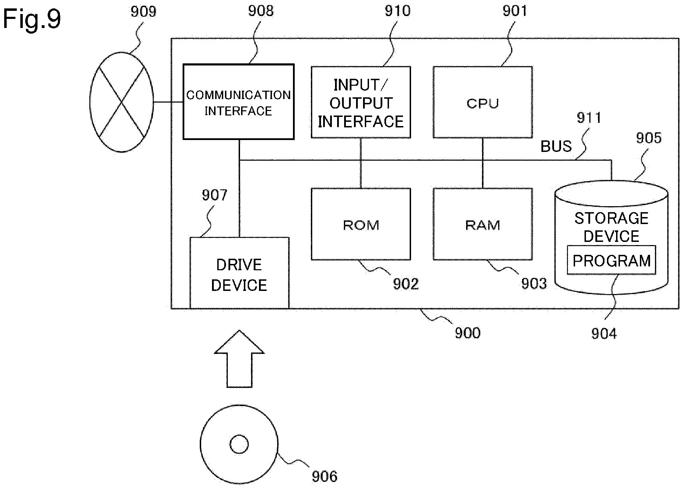

Each component of the in-ear acoustic authentication device 100, 100a described in the first to fourth example embodiments indicates a block of functional units. Some or all of these components are implemented by an information processing apparatus 900 as illustrated in Fig. 9, for example. Fig. 9 is a block diagram illustrating an example of a hardware configuration of the information processing apparatus 900.

As illustrated in Fig. 9, the information processing apparatus 900 includes the following configuration as an example.

- a central processing unit (CPU) 901
- a read only memory (ROM) 902
- a random access memory (RAM) 903
- a program 904 loaded into the RAM 903
- a storage device 905 storing the program 904
- a drive device 907 that reads and writes a recording medium 906
- a communication interface 908 connected to a communication network 909
- an input/output interface 910 for inputting/outputting data
- a bus 911 connecting respective components

Each component of the in-ear acoustic authentication device 100, 100a described in the first to fourth example embodiments is achieved by the CPU 901 reading and executing the program 904 for achieving these functions. The program 904 for achieving the function of each component is stored in the storage device 905 or the ROM 902 in advance, for example, and the CPU 901 loads the program into the RAM 903 and executes the program as necessary. The program 904 may be supplied to the CPU 901 via the communication network 909, or may be stored in advance in the recording medium 906, and the drive device 907 may read the program and supply the program to the CPU 901.

According to the above configuration, the in-ear acoustic authentication device 100, 100a described in the first to fourth example embodiments is achieved as hardware. Therefore, effects similar to the effects described in the first to fourth example embodiments can be obtained.

While the disclosure has been particularly shown and described with reference to exemplary embodiments thereof, the disclosure is not limited to these embodiments. It will be understood by those of ordinary skill in the art that various changes in form and details of the exemplary embodiments may be made therein without departing from the scope of the disclosure as defined by the claims.

[Industrial Applicability]

The disclosure can be used for, in addition to biometric authentication, for example, an electronic device used by being worn on the ear of a person, such as a hearing aid and an earphone, and security and other operations.

[Reference signs List]

10    in-ear acoustic authentication device
11    feature extraction unit

12  correction unit
13  authentication unit
100  in-ear acoustic authentication device
100a  in-ear acoustic authentication device
103  feature extraction unit
104  correction unit
105  authentication unit
106  filter generating unit
107  registration unit
300  audio device

**Claims**

1. An in-ear acoustic authentication device (100) comprising:

   a feature extraction means (103) configured to input an inspection signal to an ear of a subject by using an audio device (300), and when receiving an echo signal from the subject, extract, from the echo signal, a first feature related to a system including the audio device (300) and an ear of the subject;
   a correction means (104) configured to correct the first feature to a second feature related to a system including a reference device and the ear of the subject using a parameter representing a relationship between the audio device (300) and the reference device; and
   an authentication means (105) configured to authenticate the subject by collating the second feature with a feature indicated in a pre-registered authentication information.

2. The in-ear acoustic authentication device (100) according to claim 1, wherein

   the feature extraction means (103) calculates a first acoustic characteristic, as the first feature, of a system including the audio device (300) and an ear of the subject based on the inspection signal and the echo signal, and wherein
   the correction means (104) corrects the first acoustic characteristic to a second acoustic characteristic in a case where the audio device (300) is the reference device.

3. The in-ear acoustic authentication device (100) according to claim 2, wherein

   the first acoustic characteristic is represented by a product of an acoustic characteristic with the audio device as a factor and an acoustic characteristic with the subject as a factor, and wherein
   the second acoustic characteristic is represented by a product of an acoustic characteristic with the reference device as a factor and an acoustic characteristic with the subject as a factor.

4. The in-ear acoustic authentication device (100) according to claim 2 or 3, wherein
   the second feature is an average of a plurality of the second acoustic characteristics of a plurality of systems including a plurality of audio devices (300) different from each other and an ear of a specific person.

5. The in-ear acoustic authentication device according to any one of claims 1 to 4, wherein
   the correction means (104) calculates an average of features related to a plurality of systems including the audio device (300) and ears of a plurality of persons different from each other, and calculates another first feature obtained by subtracting the calculated average of the features from the first feature.

6. The in-ear acoustic authentication device (100) according to any one of claims 1 to 5, further comprising:

   a filter generating means (106) configured to generate a correction filter for correcting an acoustic characteristic of a system including the audio device (300) and an ear of a specific person to an acoustic characteristic of a system including the reference device and the ear of the specific person, wherein
   the correction means (104) corrects the first feature to the second feature using the correction filter.

7. The in-ear acoustic authentication device (100) according to claim 6, wherein
   the correction filter is a ratio between an acoustic characteristic with the audio device (300) as a factor and an acoustic characteristic with the reference device as a factor.

8. The in-ear acoustic authentication device (100) according to claim 7, wherein

the first feature is a first acoustic characteristic of a system including the audio device (300) and an ear of the subject, and wherein
the first acoustic characteristic is represented by a product of an acoustic characteristic with the audio device (300) as a factor and an acoustic characteristic with the subject as a factor.

9. The in-ear acoustic authentication device (100) according to any one of claims 6 to 8, wherein
the filter generating means generates the correction filter by using an acoustic characteristic of a system including the audio device and an ear of one person and an acoustic characteristic of a system including the reference device and the ear of the one person.

10. The in-ear acoustic authentication device (100) according to any one of claims 6 to 8, wherein
the filter generating means (106) generates the correction filter by using acoustic characteristics of a plurality of systems including the audio device (300) and ears of a plurality of different persons different from each other and acoustic characteristics of a plurality of systems including the reference device and the ears of the plurality of different persons different from each other.

11. The in-ear acoustic authentication device (100a) according to any one of claims 1 to 10, further comprising:

when the subject is a subject to be registered,
a registration means (107) configured to register the second feature corrected from the first feature by the correction means as authentication information in association with the subject.

12. The in-ear acoustic authentication device (100) according to any one of claims 1 to 11, wherein
the correction means (104) is configured to correct the first feature to the second feature using a parameter representing a relationship between an acoustic characteristics related to the system including the audio device (300) and the ear of the subject and an acoustic characteristics related to the system including the reference device and the ear of the subject.

13. The in-ear acoustic authentication device (100) according to any one of claims 1 to 11, wherein the correction means (104) corrects the first feature including the acoustic characteristic with the audio device (300) as a factor and the acoustic characteristic with the subject as a factor to the second feature including the acoustic characteristic with the reference device as a factor and the acoustic characteristic with the subject as a factor using the parameter.

14. A computer implemented in-ear acoustic authentication method comprising:

inputting an inspection signal to an ear of a subject by using an audio device, and when receiving an echo signal from the subject, extracting, from the echo signal, a first feature related to a system including the audio device (300) and an ear of the subject;
correcting the first feature to a second feature related to a system including a reference device and the ear of the subject using a parameter representing a relationship between the audio device (300) and the reference device, and
authenticating the subject by collating the second feature with a feature indicated in a pre-registered authentication information.

15. A program for causing a computer to execute:

inputting an inspection signal to an ear of a subject by using an audio device, and when receiving an echo signal from the subject, extracting, from the echo signal, a first feature related to a system including the audio device and an ear of the subject;
correcting the first feature to a second feature related to a system including a reference device and the ear of the subject using a parameter representing a relationship between the audio device (300) and the reference device; and
authenticating the subject by collating the second feature with a feature indicated in a pre-registered authentication information.

**Patentansprüche**

1.  Ein akustisches In-Ohr-Authentifizierungsgerät (100), das Folgendes umfasst:

    Ein Merkmalsextraktionsmittel (103), das so konfiguriert ist, dass es ein Prüfsignal in ein Ohr einer Person unter Verwendung eines Audiogeräts (300) eingibt und bei Empfang eines Echosignals von der Person aus dem Echosignal ein erstes Merkmal extrahiert, das sich auf ein System bezieht, das das Audiogerät (300) und ein Ohr der Person umfasst;
    ein Korrekturmittel (104), das so konfiguriert ist, dass es das erste Merkmal in ein zweites Merkmal korrigiert, das mit einem System zusammenhängt, das eine Referenzvorrichtung und das Ohr der Person umfasst, wobei ein Parameter verwendet wird, der eine Beziehung zwischen der Audiovorrichtung (300) und der Referenzvorrichtung darstellt; und
    ein Authentifizierungsmittel (105), das so konfiguriert ist, dass es die Person authentifiziert, indem es das zweite Merkmal mit einem Merkmal vergleicht, das in einer vorregistrierten Authentifizierungsinformation angegeben ist.

2.  Akustische In-Ohr-Authentifizierungsvorrichtung (100) gemäß Anspruch 1, wobei

    Das Merkmalsextraktionsmittel (103) ein erstes akustisches Merkmal als erstes Merkmal eines Systems, das die Audioeinrichtung (300) und ein Ohr der Person umfasst, basierend auf dem Inspektionssignal und dem Echosignal berechnet, und wobei
    das Korrekturmittel (104) das erste akustische Merkmal in ein zweites akustisches Merkmal korrigiert, wenn das Audiogerät (300) das Referenzgerät ist.

3.  Akustisches In-Ohr-Authentifizierungsgerät (100) nach Anspruch 2, wobei

    das erste akustische Merkmal durch ein Produkt eines akustischen Merkmals mit dem Audiogerät als Faktor und eines akustischen Merkmals mit dem Subjekt als Faktor dargestellt wird und
    das zweite akustische Merkmal durch ein Produkt eines akustischen Merkmals mit dem Referenzgerät als Faktor und eines akustischen Merkmals mit dem Subjekt als Faktor dargestellt wird.

4.  Akustische In-Ohr-Authentifizierungsvorrichtung (100) gemäß Anspruch 2 oder 3, wobei das zweite Merkmal ein Durchschnitt einer Vielzahl der zweiten akustischen Merkmale einer Vielzahl von Systemen ist, die eine Vielzahl von Audiogeräten (300), die sich voneinander unterscheiden, und ein Ohr einer bestimmten Person umfassen.

5.  Akustische In-Ohr-Authentifizierungsvorrichtung gemäß einem der Ansprüche 1 bis 4, wobei

    das Korrekturmittel (104) einen Durchschnitt von Merkmalen berechnet, die mit einer Vielzahl von Systemen in Zusammenhang stehen,
    einschließlich des Audiogeräts (300) und Ohren einer Vielzahl von Personen, die sich voneinander unterscheiden, und ein weiteres erstes Merkmal berechnet, das durch Subtrahieren des berechneten Durchschnitts der Merkmale von dem ersten Merkmal erhalten wird.

6.  Akustische In-Ohr-Authentifizierungsvorrichtung (100) nach einem der Ansprüche 1 bis 5, ferner umfassend:

    ein Filtererzeugungsmittel (106), das so konfiguriert ist, dass es ein Korrekturfilter zum Korrigieren einer akustischen Charakteristik eines Systems, das die Audioeinrichtung (300) und ein Ohr einer bestimmten Person umfasst, auf eine akustische Charakteristik eines Systems, das die Referenzeinrichtung und das Ohr der bestimmten Person umfasst, erzeugt, wobei
    das Korrekturmittel (104) das erste Merkmal unter Verwendung des Korrekturfilters in das zweite Merkmal korrigiert.

7.  Akustische In-Ohr-Authentifizierungsvorrichtung (100) nach Anspruch 6, wobei das Korrekturfilter ein Verhältnis zwischen einer akustischen Charakteristik mit der Audiovorrichtung (300) als Faktor und einer akustischen Charakteristik mit der Referenzvorrichtung als Faktor ist.

8.  Akustische In-Ohr-Authentifizierungsvorrichtung (100) nach Anspruch 7, wobei

das erste Merkmal eine erste akustische Eigenschaft eines Systems ist, das die Audioeinrichtung (300) und ein Ohr der Person umfasst, und wobei
die erste akustische Eigenschaft durch ein Produkt einer akustischen Eigenschaft mit der Audioeinrichtung (300) als Faktor und einer akustischen Eigenschaft mit der Person als Faktor dargestellt wird.

9. Akustische In-Ohr-Authentifizierungsvorrichtung (100) gemäß einem der Ansprüche 6 bis 8, wobei
das Filtererzeugungsmittel das Korrekturfilter unter Verwendung einer akustischen Charakteristik eines Systems, das die Audioeinrichtung und ein Ohr einer Person umfasst, und einer akustischen Charakteristik eines Systems, das die Referenzvorrichtung und das Ohr der einen Person umfasst, erzeugt.

10. Akustische In-Ohr-Authentifizierungsvorrichtung (100) gemäß einem der Ansprüche 6 bis 8, wobei
das Filtererzeugungsmittel (106) das Korrekturfilter unter Verwendung von akustischen Eigenschaften einer Vielzahl von Systemen, einschließlich des Audiogeräts (300) und der Ohren einer Vielzahl unterschiedlicher Personen, die sich voneinander unterscheiden, und akustischen Eigenschaften einer Vielzahl von Systemen, einschließlich des Referenzgeräts und der Ohren der Vielzahl unterschiedlicher Personen, die sich voneinander unterscheiden, erzeugt.

11. Akustische In-Ohr-Authentifizierungsvorrichtung (100a) gemäß einem der Ansprüche 1 bis 10, ferner umfassend:

wenn die Person eine zu registrierende Person ist,
ein Registrierungsmittel (107), das so konfiguriert ist, dass es das zweite Merkmal, das durch das Korrekturmittel aus dem ersten Merkmal korrigiert wurde, als Authentifizierungsinformation in Verbindung mit der Person registriert.

12. Akustische In-Ohr-Authentifizierungsvorrichtung (100) gemäß einem der Ansprüche 1 bis 11, wobei
das Korrekturmittel (104) so konfiguriert ist, dass es das erste Merkmal unter Verwendung eines Parameters, der eine Beziehung zwischen einer akustischen Eigenschaft, die mit dem System einschließlich der Audiovorrichtung (300) und dem Ohr der Person in Zusammenhang steht, und einer akustischen Eigenschaft, die mit dem System einschließlich der Referenzvorrichtung und dem Ohr der Person in Zusammenhang steht, darstellt, in das zweite Merkmal korrigiert.

13. Akustisches In-Ohr-Authentifizierungsgerät (100) gemäß einem der Ansprüche 1 bis 11, wobei das Korrekturmittel (104) das erste Merkmal, das die akustische Charakteristik mit dem Audiogerät (300) als Faktor und die akustische Charakteristik mit der Person als Faktor enthält, in das zweite Merkmal, das die akustische Charakteristik mit dem Referenzgerät als Faktor und die akustische Charakteristik mit der Person als Faktor enthält, unter Verwendung des Parameters korrigiert.

14. Computerimplementiertes In-Ohr-Akustik-Authentifizierungsverfahren, umfassend:

Eingabe eines Prüfsignals in ein Ohr einer Person unter Verwendung eines Audiogeräts und, wenn ein Echosignal von der Person empfangen wird, Extrahieren eines ersten Merkmals aus dem Echosignal, das mit einem System in Zusammenhang steht, das das Audiogerät (300) und ein Ohr der Person umfasst;
Korrigieren des ersten Merkmals in ein zweites Merkmal, das mit einem System in Zusammenhang steht, das ein Referenzgerät und das Ohr der Person umfasst, unter Verwendung eines Parameters, der eine Beziehung zwischen dem Audiogerät (300) und dem Referenzgerät darstellt; und
Authentifizieren der Person durch Vergleichen des zweiten Merkmals mit einem Merkmal, das in einer vorab registrierten Authentifizierungsinformation angegeben ist.

15. Ein Programm, das einen Computer dazu veranlasst, Folgendes auszuführen:

Eingabe eines Prüfsignals in ein Ohr einer Person unter Verwendung eines Audiogeräts und, wenn ein Echosignal von der Person empfangen wird, Extrahieren eines ersten Merkmals aus dem Echosignal, das mit einem System zusammenhängt, das das Audiogerät und ein Ohr der Person umfasst;
Korrigieren des ersten Merkmals in ein zweites Merkmal, das mit einem System zusammenhängt, das ein Referenzgerät und das Ohr der Person umfasst, unter Verwendung eines Parameters, der eine Beziehung zwischen dem Audiogerät (300) und dem Referenzgerät darstellt; und
Authentifizierung der Person durch Abgleich des zweiten Merkmals mit einem in einer vorab registrierten Authentifizierungsinformation angegebenen Merkmal.

**Revendications**

1. Dispositif d'authentification acoustique intraauriculaire (100) comprenant :

   un moyen d'extraction d'attribut (103) configuré pour entrer un signal d'inspection dans une oreille d'un sujet en utilisant un dispositif audio (300), et lors de la réception d'un signal d'écho à partir du sujet, extraire, à partir du signal d'écho, un premier attribut lié à un système comportant le dispositif audio (300) et une oreille du sujet ; un moyen de correction (104) configuré pour corriger le premier attribut pour obtenir un deuxième attribut lié à un système comportant un dispositif de référence et l'oreille du sujet en utilisant un paramètre représentant une relation entre le dispositif audio (300) et le dispositif de référence ; et un moyen d'authentification (105) configuré pour authentifier le sujet en collationnant le deuxième attribut avec un attribut indiqué dans des informations d'authentification préenregistrées.

2. Dispositif d'authentification acoustique intraauriculaire (100) selon la revendication 1, dans lequel

   le moyen d'extraction d'attribut (103) calcule une première caractéristique acoustique, en tant que premier attribut, d'un système comportant le dispositif audio (300) et une oreille du sujet sur la base du signal d'inspection et du signal d'écho, et dans lequel le moyen de correction (104) corrige la première caractéristique acoustique pour obtenir une deuxième caractéristique acoustique dans un cas où le dispositif audio (300) est le dispositif de référence.

3. Dispositif d'authentification acoustique intraauriculaire (100) selon la revendication 2, dans lequel

   la première caractéristique acoustique est représentée par un produit d'une caractéristique acoustique avec le dispositif audio en tant que facteur et d'une caractéristique acoustique avec le sujet en tant que facteur, et dans lequel la deuxième caractéristique acoustique est représentée par un produit d'une caractéristique acoustique avec le dispositif de référence en tant que facteur et d'une caractéristique acoustique avec le sujet en tant que facteur.

4. Dispositif d'authentification acoustique intraauriculaire (100) selon la revendication 2 ou 3, dans lequel le deuxième attribut est une moyenne d'une pluralité des deuxièmes caractéristiques acoustiques d'une pluralité de systèmes comportant une pluralité de dispositifs audio (300) différents les uns des autres et une oreille d'une personne spécifique.

5. Dispositif d'authentification acoustique intraauriculaire selon l'une quelconque des revendications 1 à 4, dans lequel le moyen de correction (104) calcule une moyenne d'attributs liés à une pluralité de systèmes comportant le dispositif audio (300) et des oreilles d'une pluralité de personnes différentes les unes des autres, et calcule un autre premier attribut obtenu en soustrayant la moyenne calculée des attributs du premier attribut.

6. Dispositif d'authentification acoustique intraauriculaire (100) selon l'une quelconque des revendications 1 à 5, comprenant en outre :

   un moyen de génération de filtre (106) configuré pour générer un filtre de correction pour corriger une caractéristique acoustique d'un système comportant le dispositif audio (300) et une oreille d'une personne spécifique pour obtenir une caractéristique acoustique d'un système comportant le dispositif de référence et l'oreille de la personne spécifique, dans lequel le moyen de correction (104) corrige le premier attribut pour obtenir le deuxième attribut en utilisant le filtre de correction.

7. Dispositif d'authentification acoustique intraauriculaire (100) selon la revendication 6, dans lequel le filtre de correction est un rapport entre une caractéristique acoustique avec le dispositif audio (300) en tant que facteur et une caractéristique acoustique avec le dispositif de référence en tant que facteur.

8. Dispositif d'authentification acoustique intraauriculaire (100) selon la revendication 7, dans lequel

   le premier attribut est une première caractéristique acoustique d'un système comportant le dispositif audio (300) et une oreille du sujet, et dans lequel la première caractéristique acoustique est représentée par un produit d'une caractéristique acoustique avec le dispositif audio (300) en tant que facteur et d'une caractéristique acoustique avec le sujet en tant que facteur.

9. Dispositif d'authentification acoustique intraauriculaire (100) selon l'une quelconque des revendications 6 à 8, dans lequel

le moyen de génération de filtre génère le filtre de correction en utilisant une caractéristique acoustique d'un système comportant le dispositif audio et une oreille d'une personne et une caractéristique acoustique d'un système comportant le dispositif de référence et l'oreille de la personne.

10. Dispositif d'authentification acoustique intraauriculaire (100) selon l'une quelconque des revendications 6 à 8, dans lequel

le moyen de génération de filtre (106) génère le filtre de correction en utilisant des caractéristiques acoustiques d'une pluralité de systèmes comportant le dispositif audio (300) et des oreilles d'une pluralité de personnes différentes différentes les unes des autres et des caractéristiques acoustiques d'une pluralité de systèmes comportant le dispositif de référence et les oreilles de la pluralité de personnes différentes différentes les unes des autres.

11. Dispositif d'authentification acoustique intraauriculaire (100a) selon l'une quelconque des revendications 1 à 10, comprenant en outre:

lorsque le sujet est un sujet devant être enregistré,
un moyen d'enregistrement (107) configuré pour enregistrer le deuxième attribut corrigeant le premier attribut par le moyen de correction en tant qu'informations d'authentification en association avec le sujet.

12. Dispositif d'authentification acoustique intraauriculaire (100) selon l'une quelconque des revendications 1 à 11, dans lequel

le moyen de correction (104) est configuré pour corriger le premier attribut pour obtenir le deuxième attribut en utilisant un paramètre représentant une relation entre une caractéristique acoustique liée au système comportant le dispositif audio (300) et l'oreille du sujet et une caractéristique acoustique liée au système comportant le dispositif de référence et l'oreille du sujet.

13. Dispositif d'authentification acoustique intraauriculaire (100) selon l'une quelconque des revendications 1 à 11, dans lequel le moyen de correction (104) corrige le premier attribut comportant la caractéristique acoustique avec le dispositif audio (300) en tant que facteur et la caractéristique acoustique avec le sujet en tant que facteur pour obtenir le deuxième attribut comportant la caractéristique acoustique avec le dispositif de référence en tant que facteur et la caractéristique acoustique avec le sujet en tant que facteur en utilisant le paramètre.

14. Procédé d'authentification acoustique intraauriculaire mis en œuvre par ordinateur comprenant :

l'entrée d'un signal d'inspection dans une oreille d'un sujet en utilisant un dispositif audio, et lors de la réception d'un signal d'écho à partir du sujet, l'extraction, à partir du signal d'écho, d'un premier attribut lié à un système comportant le dispositif audio (300) et une oreille du sujet ;
la correction du premier attribut pour obtenir un deuxième attribut lié à un système comportant un dispositif de référence et l'oreille du sujet en utilisant un paramètre représentant une relation entre le dispositif audio (300) et le dispositif de référence ; et
l'authentification du sujet en collationnant le deuxième attribut avec un attribut indiqué dans des informations d'authentification préenregistrées.

15. Programme pour amener un ordinateur à exécuter :

l'entrée d'un signal d'inspection dans une oreille d'un sujet en utilisant un dispositif audio, et lors de la réception d'un signal d'écho à partir du sujet, l'extraction, à partir du signal d'écho, d'un premier attribut lié à un système comportant le dispositif audio et une oreille du sujet ;
la correction du premier attribut pour obtenir un deuxième attribut lié à un système comportant un dispositif de référence et l'oreille du sujet en utilisant un paramètre représentant une relation entre le dispositif audio (300) et le dispositif de référence ; et
l'authentification du sujet en collationnant le deuxième attribut avec un attribut indiqué dans des informations d'authentification préenregistrées.

Fig.1

10

FEATURE
EXTRACTION UNIT
11

CORRECTION UNIT
12

AUTHENTICATION
UNIT
13

IN-EAR ACOUSTIC AUTHENTICATION DEVICE

# Fig.2

START

EXTRACT FEATURE FROM ECHO SIGNAL — S1

CORRECT FEATURE — S2

AUTHENTICATE SUBJECT — S3

END

Fig.3

1

SPEAKER 300

100

IN-EAR ACOUSTIC
AUTHENTICATION DEVICE

EAR CANAL

MICROPHONE

STORAGE DEVICE 200

AUTHENTICATION
INFORMATION

DEVICE
INFORMATION

Fig.4

# Fig.5

```
        ┌─────────────────┐
        │     FILTER      │
        │   GENERATION    │
        └────────┬────────┘
                 │
    ┌────────────┴────────────┐        S201
    │ ACQUIRE DEVICE INFORMATION │
    └────────────┬────────────┘
                 │
    ┌────────────┴────────────┐        S202
    │   ACQUIRE REFERENCE G'_ref   │
    └────────────┬────────────┘
                 │
    ┌────────────┴────────────┐        S203
    │     ACQUIRE ACOUSTIC     │
    │  CHARACTERISTIC G'_tar   │
    └────────────┬────────────┘
                 │
    ┌────────────┴────────────┐        S204
    │ GENERATE CORRECTION FILTER │
    │          F_tar           │
    └────────────┬────────────┘
                 │
    ┌────────────┴────────────┐        S205
    │ STORE CORRECTION FILTER F_tar │
    └────────────┬────────────┘
                 │
        ┌────────┴────────┐
        │       END       │
        └─────────────────┘
```

Fig.6

START

TRANSMIT INSPECTION SIGNAL — S101

OBSERVE ECHO SIGNAL — S102

CALCULATE ACOUSTIC CHARACTERISTIC G_tar — S103

ACQUIRE CORRECTION FILTER F_tar — S104

CORRECT ACOUSTIC CHARACTERISTIC G — S105

COLLATE CORRECTED ACOUSTIC CHARACTERISTIC G' WITH AUTHENTICATION INFORMATION G_reg — S106

OUTPUT AUTHENTICATION RESULT — S107

END

## Fig.7

DEVICE INFORMATION
(CORRECTION FILTER)

AUTHENTICATION
INFORMATION

100a

INSPECTION
SIGNAL

103

FEATURE
EXTRACTION
UNIT

104

CORRECTION
UNIT

105

AUTHENTICATION
UNIT

AUTHENTICATION
RESULT

ECHO SIGNAL

107

REGISTRATION
UNIT

AUTHENTICATION
INFORMATION

IN-EAR ACOUSTIC AUTHENTICATION DEVICE

# Fig.8

REGISTER
AUTHENTICATION
INFORMATION

TRANSMIT INSPECTION SIGNAL — S301

OBSERVE ECHO SIGNAL — S302

CALCULATE ACOUSTIC
CHARACTERISTIC G_tar — S303

REGISTER CORRECTED ACOUSTIC
CHARACTERISTIC G_ref AS
AUTHENTICATION INFORMATION — S304

END

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018198310 A
- US 29019012446 A